Europäisches Patentamt

European Patent Office

Office européen des brevets

(11) Numéro de publication: **0 274 922 B1**

(12) **FASCICULE DE BREVET EUROPEEN**

(45) Date de publication de fascicule du brevet:
14.08.91

(21) Numéro de dépôt: **87402666.9**

(22) Date de dépôt: **25.11.87**

(51) Int. Cl.⁵: **F16B 37/06**

(54) **Ecrou autosertisseur autopoinçonneur.**

(30) Priorité: **27.11.86 FR 8616586**

(43) Date de publication de la demande:
**20.07.88 Bulletin 88/29**

(45) Mention de la délivrance du brevet:
**14.08.91 Bulletin 91/33**

(84) Etats contractants désignés:
**AT BE DE ES GB IT NL SE**

(56) Documents cités:
**EP-A- 0 041 593**    **GB-A- 1 205 605**
**GB-A- 2 161 571**    **US-A- 3 810 291**
**US-A- 3 927 465**    **US-A- 4 432 681**

(73) Titulaire: **BOULONNERIE DE THIANT**
**B.P. No. 4**
**F-59224 Thiant(FR)**

(72) Inventeur: **Van Welden, Michel**
**59, rue du Quesnoy Ruesnes**
**F-59530 Le Quesnoy(FR)**

(74) Mandataire: **Phélip, Bruno et al**
**c/o Cabinet Harlé & Phélip 21, rue de La**
**Rochefoucauld**
**F-75009 Paris(FR)**

Rank Xerox (UK) Business Services

**Description**

La présente invention appartient au domaine de la mécanique et a pour objet un écrou autosertisseur possédant la propriété d'être également autopoinçonneur.

Les écrous autopoinçonneurs forment une catégorie générale de produits de l'industrie mécanique et, en particulier, de l'automobile.

Ce sont des écrous ayant la particularité de poinçonner, grâce à des moyens de perforation, une tôle ou tout autre matériau servant de support.

Comme cela est connu, ce type d'ecrou possède complémentairement des moyens pour se sertir lui-même, ses mouvements de rotation et de déplacement par rapport à son axe étant supprimés. Une fois l'écrou placé sur son support, il se trouve enchâssé dans celui-ci.

De tels écrous sont généralement utilisés dans les chaînes automatiques d'assemblage, par exemple dans l'industrie automobile. On évite alors les aléas du soudage, et on peut également mettre en oeuvre des matériaux non soudables.

Les deux principales qualités requises pour ce type de produit sont d'une part, la résistance au couple de désertissage, c'est-à-dire à un mouvement de rotation par rapport au support et, d'autre part, la résistance à la force de désertissage, c'est-à-dire à un mouvement de désencastrement axial de l'écrou par rapport au support.

On connaît par le document US-A-3 810 291 un écrou autosertisseur autopoinçonneur comprenant une tête perforatrice ronde dont le pourtour externe est droit. Cette tête perforatrice est complètement entourée par un rebord périphérique polygonal ayant une hauteur inférieure à celle du poinçon et qui présente une face interne inclinée rentrante.

L'opération de sertissage de l'écrou est réalisée, après poinçonnage, par encastrement, à force et par compression, de la tôle support dans la cavité périphérique réalisée par l'inclinaison de la face interne du rebord. Ce rebord périphérique empêche à la fois le mouvement de désencastrement axial de l'écrou et, par sa forme polygonale, les mouvements de rotation par rapport au support. De telles caractéristiques limitent la résistance au désertissage.

Dans d'autres types d'écrous connus, les deux fonctions d'autopoinçonnage et d'autosertissage sont obtenues en prévoyant sur le corps de l'écrou, un élément perforateur (ou tête) de section carrée. Ainsi, lorsque le support de l'écrou est percé par cette tête perforatrice, la forme même de la tête empêche l'écrou de tourner sur lui-même et assure donc une certaine solidarité entre l'écrou et son support. Cependant, ces écrous se révèlent peu performants pour assurer une liaison fiable et durable avec leur support, alors que cette fonction est essentielle dans les utilisations envisagées.

Le document US-A-4.432.681 décrit un écrou autosertisseur autopoinçonneur possédant en son centre un trou taraudé et, à la périphérie de ce trou, un élément perforateur polygonal. Le sertissage est assuré par la forme de l'élément perforateur ainsi que par un ensemble de pentes de compression situées sur la même face de l'écrou que l'élément perforateur, mais à la périphérie de cette face. Ces pentes de compression partent de la périphérie et sont inclinées vers la base de la tête perforatrice de l'écrou ; elles sont séparées par des surfaces plates faisant dépression et sont placées radialement de façon à ce que leur axe central coïncide avec l'un des angles de la tête perforatrice polygonale. De plus, la base de la tête perforatrice est incurvée ou coupée au niveau des angles, de manière à pouvoir recevoir une partie du matériau de support. Ainsi, après poinçonnage du matériau de support par la tête polygonale, les pentes de compression en forcent une partie à venir s'encastrer sous l'évasement des angles de la tête perforatrice.

Dans l'écrou faisant l'objet de US-A-4.432.681, le sertissage est ainsi assuré, d'une part, par encastrement du matériau de support dans les surfaces plates faisant dépression séparant les différentes pentes de compression, et d'autre part, par la forme polygonale de la tête perforatrice.

Cependant, cet écrou est de réalisation très compliquée et, de plus, la configuration polygonale de la tête perforatrice pose des problèmes au niveau du positionnement de l'écrou sur la presse de poinçonnage. Cette configuration provoque aussi une usure beaucoup plus rapide de l'outillage en raison des chocs répétés au niveau des angles.

On a déjà proposé un type d'écrou autosertisseur autopoinçonneur possédant un élément perforateur rond. Cet écrou est constitué d'un corps carré surmonté, à la périphérie du trou de taraudage, d'un élément perforateur rond possédant, à sa base externe, un évasement circulaire susceptible de recevoir une partie du matériau de support, de façon a assurer le sertissage de l'écrou. Sur la même face, aux quatre coins de l'écrou, sont disposés quatre plots triangulaires.

Lors du poinçonnage, le matériau de support vient glisser sur chacun des quatre plots et une partie de ce matériau se loge en quatre points dans la partie évasée de l'élément perforateur. Ces quatre plots assurent, par leur individualité, un meilleur sertissage de l'écrou, le matériau de support étant encastré entre eux.

On constate, dans la pratique, qu'un tel écrou résiste bien au couple de désertissage, mais que la résistance à la force de désertissage n'est pas suffisante, l'encastrement de matière sous la partie évasée n'étant effectué que localement, en différents points distincts.

La présente invention a pour objet de remédier à ces différents inconvénients particulièrement désavantageux pour ce genre de technique, en fournissant un écrou capable de résister convenablement aussi bien au couple de désertissage qu'à la force de désertissage.

Cet écrou autosertisseur autopoinçonneur, à tête perforatrice ronde, répond aux normes précises, nécessaires pour ce type de produit et présente une excellente résistance au couple de désertissage et à la force de désertissage.

L'invention selon les termes de la revendication 1 concerne donc un écrou autosertisseur autopoinçonneur destiné à être fixé par sertissage sur un support. Cet écrou comprend un corps percé d'un trou taraudé et, en saillie sur ce corps, une tête perforatrice ronde formant poinçon, entourée d'un rebord en forme de jupe continue. Le rebord, de hauteur inférieure à celle du poinçon, présente une forme polygonale qui permet d'empêcher tout mouvement de rotation de l'écrou autour de son axe central ; selon l'invention, cet écrou comporte un poinçon évasé extérieurement par rapport au trou taraudé. Cette caractéristique permet de déterminer, sur toute la partie externe dudit poinçon, une partie évasée rentrante qui permet le sertissage par encastrement circulaire complet d'une partie de la tôle support sous ladite partie évasée de la tête perforatrice, par le phénomène de fluage. Ceci élimine les possibilités de mouvement axial de l'écrou fixé sur son support et permet à l'écrou de résister à la poussée lors de l'introduction du vissage.

Dans un mode de réalisation particulièrement avantageux, la jupe polygonale continue est de forme carrée.

Selon une caractéristique complémentaire, la face interne de la jupe polygonale continue, délimitant la partie évasée est inclinée d'un angle par $\alpha$ rapport à l'axe central de l'écrou, au moins au niveau des angles de la jupe.

Selon une caractéristique avantageuse, cet angle $\alpha$ est de 30 à 45° environ par rapport à l'axe central de l'écrou.

Dans le mode de réalisation préféré, la jupe polygonale continue est positionnée à la périphérie extérieure du corps de l'écrou.

Par cet ensemble de caractéristiques, utilisables isolément ou en combinaison, l'écrou selon l'invention, une fois positionné, résiste au couple de désertissage en supprimant les inconvénients décrits précédemment d'un élément perforateur polygonal, ainsi qu'à la force de désertissage.

Le sertissage de l'écrou n'est plus assuré par un encastrement de matière entre des plots mais par réalisation d'un profil particulier du support dans une gorge, ceci permettant un maintien, par encastrement uniforme et complet, de l'écrou sur son support.

L'invention sera illustrée sans être aucunement limitée par la description détaillée de certaine modes de réalisation donnés à titre d'exemples et représentés aux dessins annexés, sur lesquels :

- la figure 1 est une vue de dessus d'un écrou autopoinçonneur à huit pans conforme à l'invention,
- la figure 2 est une coupe suivant la ligne AA de la figure 1,
- les figures 3a à 3c illustrent en trois étapes, la fixation de l'écrou des figures 1 et 2 sur un support (tôle mince),
- la figure 4 représente, vu de dessus, un autre mode de réalisation particulièrement avantageux de l'écrou conforme à l'invention,
- la figure 5 est une coupe suivant la ligne BB de la figure 4,
- la figure 6 représente une autre mode de réalisation de l'invention,
- la figure 7 est une coupe suivant la ligne CC de la figure 6,
- la figure 8 est une coupe suivant la ligne DD de la figure 6.

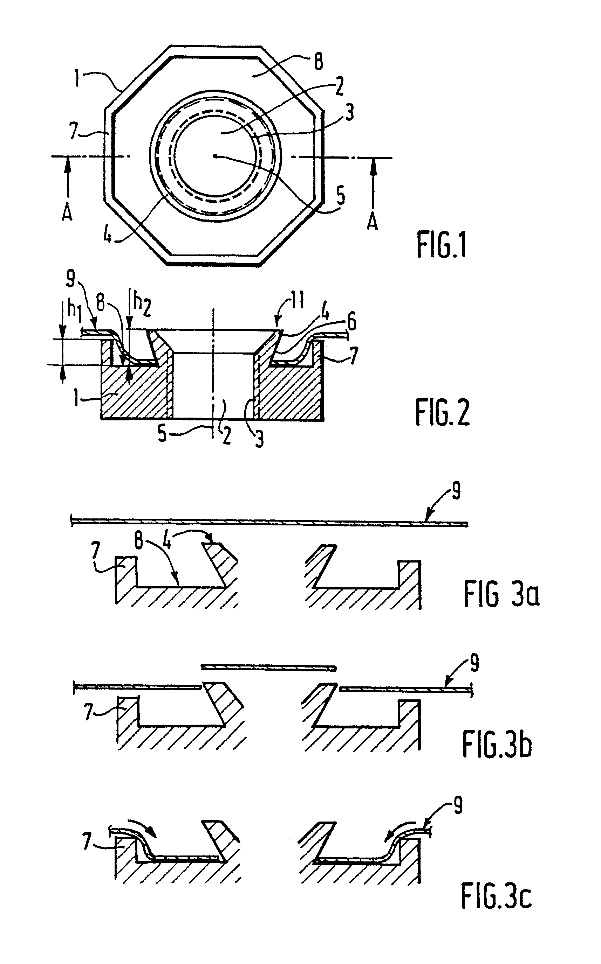

Les figures 1 et 2 représentent un premier mode de réalisation de l'écrou selon l'invention. Il comprend un corps 1 au centre duquel un trou 2 est taraudé. Le pas de vis 3 ainsi créé à l'intérieur du trou 2 permet la fixation de l'écrou avec un boulon de filetage complémentaire.

Le corps 1 de l'écrou présente (figure 2) un élément 4 dont la partie extrême 11 forme arête de coupe, et qui constitue la tête perforatrice de l'écrou. Cette tête perforatrice ronde 4 est située à la périphérie du trou 2 alésé dans l'écrou et possède le même axe 5 que le corps 1. Elle est évasée extérieurement par rapport au trou 2 pour permettre l'encastrement de matière et éliminer les mouvements axiaux de l'écrou fixé sur son support. Cette partie évasée extérieure 6 est visible sur la figure 2 représentant en coupe l'écrou de la figure 1.

Sur la même face de l'écrou, destinée à être fixée sur un support tel qu'une tôle, et à l'extérieur de la tête perforatrice 4, le corps 1 est prolongé de façon à former une jupe 7 continue tout autour de l'élément perforateur 4. La jupe 7 est placée à une distance suffisante de l'élément perforateur 4 pour permettre l'encastrement de matériau de support dans la gorge 8. Cette jupe continue 7, de forme polygonale, assure le sertissage du support mince ; elle a une hauteur h1 nécessairement inférieure à celle h2 de la tête perforatrice 4 de façon à être sûr que la tête perforatrice 4 joue le rôle de perceuse. La section de cette jupe 7 peut être quelconque : carrée, rectangulaire, demi-sphérique. Elle sera de préférence rectangulaire.

Les figures 3a à 3c montrent schématiquement, en coupe et à échelle agrandie trois étapes de la fixation de l'écrou selon l'invention sur le support 9, par exemple une tôle mince. Après perforation, la matrice de la presse de sertissage force la tôle 9 à s'engager dans la gorge 8 formée entre la jupe et la tête perforatrice 4. Simultanément, cette matrice écrase et allonge la tôle 9. La jupe 7 permet un phénomène de fluage ou de glissement qui pousse cette tôle 9 sous la partie évasée 6 de la tête perforatrice ronde. Etant donné la forme polygonale de la jupe 7, la tôle 9, une fois encastrée dans la gorge 8, empêche les mouvements de rotation de l'écrou, assurant ainsi une partie du sertissage. Etant donné la continuité de la jupe 7, le phénomène de fluage de la tôle mince 9, s'effectue en tous points de cette jupe 7 et assure le glissement circulaire complet d'une partie de la tôle 9 sous la partie évasée 6 de la tête perforatrice 4.

On assure ainsi un sertissage complet et efficace de l'écrou autopoinçonneur sur la tôle 9.

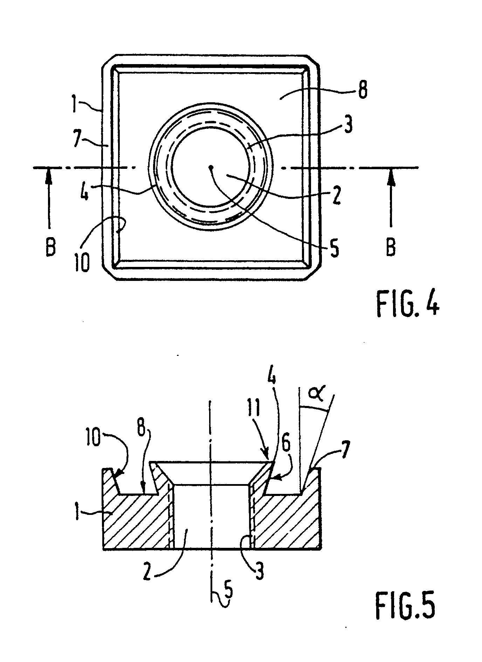

Les figures 4 et 5 représentent un mode de réalisation plus perfectionné de l'invention. La jupe polygonale 7 présente une section carrée. Ce mode de réalisation s'est avéré le meilleur en ce qui concerne la résistance au couple de désertissage. Dans l'exemple décrit et représenté, le corps 1 de l'écrou est aussi carré, ce qui n'est pas indispensable, une jupe carrée pouvant être également supportée par un corps d'écrou à six ou huit pans ou plus.

La section de la face interne de la jupe continue 7, délimitant la partie évasée de la tête perforatrice 4 est évasée (face du côté du trou 2 de l'écrou, donc en opposition avec l'élément perforateur rond 4). Cette face 10 est inclinée d'un angle α (figure 5) par rapport à l'axe de l'écrou, ce qui permet d'améliorer le fluage de la tôle 9 sur la jupe 7 et, par conséquent, le sertissage de l'écrou. Un angle α de 30 à 45° par rapport à l'axe de l'écrou procure d'excellents résultats.

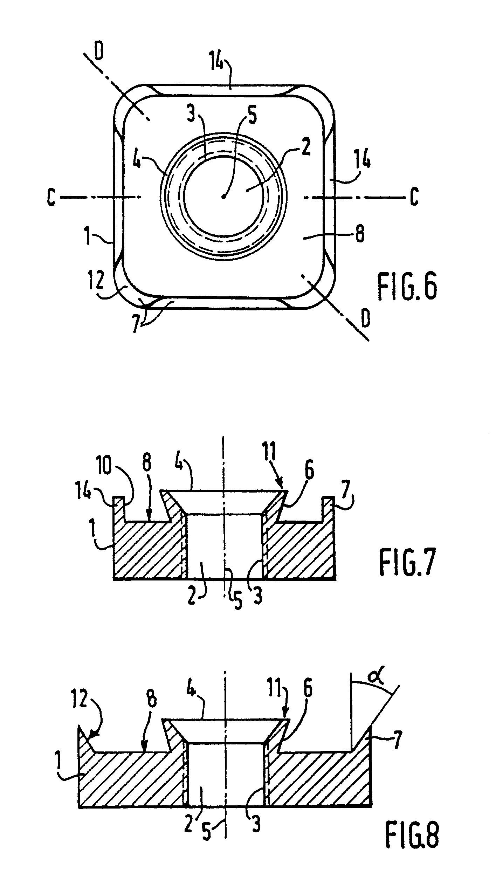

Un autre mode de réalisation de l'invention est représenté sur les figures 6 à 8. Au niveau des angles, la face interne 12 de la jupe 7 délimitant la partie évasée de la tête perforatrice 4 est elle-même évasée. Cette face 12 est inclinée d'un angle α voisin de 30 à 45° par rapport à l'axe de l'écrou. Par contre, les parties centrales 14 des côtés de la jupe 7, ne possèdent pas cette face 12 évasée, ce qui peut faciliter la fabrication de l'écrou.

On peut même réaliser une jupe 7 carrée ne comportant pas de face évasée, les quatre angles de cette jupe 7 étant simplement cassés pour faciliter la fabrication. Cette réalisation, la plus simple à mettre en oeuvre, procure d'excellents résultats tant sur le plan de la résistance au couple de désertissage que de la résistance à la force de désertissage.

Le fluage de la tôle, sur la jupe 7 continue assure un encastrement important de matière sous la tête 4, lors de la pose et la forme carrée de cette jupe empêche de façon excellente tout mouvement de rotation de l'écrou sur lui-même.

Sur les différentes figures représentées, la jupe 7 a été positionnée à la périphérie du corps 1 de l'écrou, en continuité avec le bord extérieur de ce corps 1. Ce positionnement n'est pas indispensable, la jupe 7 pouvant se trouver plus près de la tête perforatrice 4 pour un corps d'écrou de même dimension. Cependant, le positionnement de la jupe 7 à la périphérie du corps 1 facilite la fabrication de ce type d'écrou et procure, pour les dimensions normées de ces produits, une gorge 8 suffisamment grande pour permettre un encastrement facile et efficace de la tôle 9.

Il est à noter que ce type d'écrou est particulièrement adapté à la fixation sur les tôles de faible épaisseur (inférieure à 3 mm).

A titre de variante, on pourrait imaginer une jupe 7 possédant un angle obtus par rapport à l'axe de l'écrou, c'est-à-dire rentrant de façon à permettre, comme pour la tête perforatrice, un encastrement d'une partie du matériau de support.

La présente invention résoud le problème posé en mettant à profit les avantages d'un élément perforateur rond et en procurant une résistance élevée à la fois au couple de désertissage et à la force de désertissage. On obtient ainsi un écrou autosertisseur autopoinçonneur de construction simple permettant l'utilisation de matériaux non soudables et de bonne résistance aux vibrations.

L'invention s'applique de manière très intéressante à la fixation de tôles métalliques, mais elle peut également être utilisée pour la fixation de matières en plaques non métalliques decomposites présentant une certaine ductibilité.

Les signes de référence insérés après les caractéristiques techniques mentionnées dans les revendications ont pour seul but de faciliter la compréhension de ces dernières, et n'en limitent aucunement la.portée.

## Revendications

1. Ecrou autosertisseur autopoinçonneur destiné à être fixé par sertissage sur un support (9), ledit écrou comprenant un corps (1) percé d'un trou taraudé (2) et, en saillie sur ce corps (1), une tête perforatrice ronde (4) formant poinçon entourée d'un rebord en forme de jupe (7) continue, lequel rebord (7), de hauteur inférieure à celle du poinçon, présente une forme polygonale qui permet d'empêcher tout mouvement de rotation de l'ecrou autour de son axe central (5), caractérise en ce que le poinçon (4) est évasé extérieurement par rapport au trou (2) pour déterminer sur toute sa partie externe une partie évasée rentrante (6) qui permet le sertissage par encastrement circulaire complet d'une partie de la tôle (9) sous ladite partie évasée (6) de la tête perforatrice (4) par le phénomène de fluage, éliminant ainsi les possibilités de mouvement axial de l'écrou fixé sur son support et de façon à résister à la poussée lors de l'introduction du vissage.

2. Ecrou autosertisseur autopoinçonneur selon la revendication 1, caractérisé en ce qu'il comporte un rebord périphérique (7) de forme carrée.

3. Ecrou selon l'une quelconque des revendications 1 ou 2, caractérisé en ce qu'il comporte un rebord (7) dont les faces internes (10) sont inclinées d'un angle α par rapport à l'axe central (5) de l'écrou, de façon à améliorer le fluage de la tôle (9) sur ledit rebord (7).

4. Ecrou selon l'une quelconque des revendications 1 ou 2, caractérisé en ce qu'il comporte un rebord (7) muni de faces internes (12) inclinées, au niveau de ses angles, d'un angle α par rapport à l'axe central (5) de l'écrou.

5. Ecrou selon l'une quelconque des revendications 3 ou 4, caractérise en ce qu'il comporte un rebord (7) muni de faces inclinées (10, 12), d'un angle α de 30 à 45° environ, par rapport à l'axe central (5) de l'ecrou.

## Claims

1. Self-setting, self-punching nut designed to be fixed by means of setting on a support (9), the said nut comprising a body (1) pierced with a threaded hole (2) and, projecting from this body (1), a circular perforating head (4) forming a punching part surrounded by a rim (7) in the form of a continuous skirt, the rim (7), whose height is lower than that of the punching part, being polygonal and serving to prevent any rotary movement of the nut about its central axis (5), characterized in that the punching part (4) is flared out towards the outside with respect to the hole (2) in order to provide on its entire outside part a flared-out, re-entrant part (6) which permits setting by complete circular embedding of part of the sheet metal (9) under the said flared-out part (6) of the perforating head (4) by the effect of creep, thus eliminating the possibilities of axial movement of the nut fixed on its support, and such that it is resistant to thrust from the moment screw action begins.

2. Self-setting, self-punching nut according to Claim 1, characterized in that it comprises a square peripheral rim (7).

3. Nut according to either one of Claims 1 or 2, characterized in that it comprises a rim (7), whereof the internal faces (10) are inclined at an angle α with respect to the central axis (5) of the nut, such that it improves the creep of the sheet metal (9) over the said rim (7).

4. Nut according to either one of Claims 1 or 2, characterized in that it comprises a rim (7) provided with internal faces (12) which, at its angles, are inclined at an angle α with respect to the central axis (5) of the nut.

5. Nut according to either one of Claims 3 or 4, characterized in that it comprises a rim (7) provided with inclined faces (10, 12) at an angle α of approximately 30 to 45°, with respect to the central axis (5) of the nut.

## Patentansprüche

1. Selbstfassende und selbstlochende Mutter, die dazu bestimmt ist, durch Quetschverbindung auf einem Träger (9) befestigt zu werden, wobei die Mutter einen Körper (1) umfaßt, der mit einem eingeschnittenen Innengewinde (2) versehen ist und einen vorspringenden runden Perforationskopf (4) aufweist, der einen von einer Rand (7) in Form einer umlaufenden Schürze umgebenen Locher bildet, wobei die Rand (7), die eine geringere Höhe aufweist als der Locher, eine polygonale Form aufweist, die jede Rotationsbewegung der Schraube um ihre zentrale Achse (5) verhindert, dadurch gekennzeichnet, daß der Locher (4) auf der der Bohrung (2) abgelegenen Außenseite unter Bildung einer Hinterschneidung (6) aufgeweitet ist, die eine Quetschverbindung durch kreisförmiges Einspannen eines Abschnitts des Blechs (9) unter den erweiterten Abschnitt (6) des Perforationskopfs (4) infolge von Materialfließen ermöglicht, um auf diese Weise die Möglichkeit einer axialen Bewegung der auf dem Träger befestigten Schraube zu verhindern und auf diese Weise den Druckbeanspruchungen beim Herstellen der Schraubverbindung zu widerstehen.

2. Selbstfassende und selbstlochende Mutter nach Anspruch 1, dadurch gekennzeichnet, daß sie einen peripheren Rand (7) in Form eines Quadrats aufweist.

3. Mutter nach Anspruch 1 oder 2, dadurch gekennzeichnet, daß sie einen Rand (7) aufweist, dessen Innenflächen (10) zur Verbesserung des Fließens des Blechs(9) längs des Randes (7) in Bezug auf die Mittelachse (5) der Mutter unter einem Winkel $\alpha$ geneigt sind.

4. Mutter nach Anspruch 1 oder 2, dadurch gekennzeichnet, daß sie einen Rand (7) aufweist, der mit Innenflächen (12) versehen ist, die in Höhe seiner Ecken unter einem Winkel $\alpha$ bezogen auf die zentrale Achse (5) der Mutter geneigt sind.

5. Mutter nach Anspruch 3 oder 4, dadurch gekennzeichnet, daß der Rand (7) mit geneigten Flächen (10, 12) versehen ist, deren Neigungswinkel $\alpha$ bezogen auf die zentrale Achse (5) der Mutter zwischen etwa 30$^\circ$ und 45$^\circ$ liegt.

FIG.1

FIG.2

FIG 3a

FIG.3b

FIG.3c

FIG. 4

FIG.5

FIG.6

FIG.7

FIG.8